# EUROPÄISCHE PATENTSCHRIFT

(11) **EP 1 257 456 B1**
(45) Veröffentlichungstag und Bekanntmachung des Hinweises auf die Patenterteilung: **27.08.2003**
(21) Anmeldenummer: 01907226.3
(22) Anmeldetag: 19.02.2001
(51) Int. Cl.: B61D 15/06, F16F 7/12

(54) **KNAUTSCHELEMENT**
CRUMPLE ELEMENT
ELEMENT DEFORMABLE

(30) Priorität: 18.02.2000 AT 2512000
(43) Veröffentlichungstag der Anmeldung: 20.11.2002
(73) Patentinhaber: Siemens SGP Verkehrstechnik GmbH, 1110 Wien (AT)
(72) Erfinder: SCHOBEREGGER, Michael, A-8811 Scheifling (AT); SCHMEJA, Georg, A-8020 Graz (AT)
(74) Vertreter: Matschnig, Franz, Dipl.-Ing.
(86) Internationale Anmeldenummer: AT0100039
(87) Internationale Veröffentlichungsnummer: WO01060675

(56) Entgegenhaltungen:
- DE-A- 3 419 165
- US-A- 4 492 291
- US-A- 5 732 801
- PATENT ABSTRACTS OF JAPAN vol. 1995, no. 09, 31. Oktober 1995 (1995-10-31) & JP 07 145842 A (SUMITOMO LIGHT METAL IND LTD), 6. Juni 1995 (1995-06-06)

## Beschreibung

Die Erfindung betrifft ein Knautschelement eines Schienenfahrzeuges, welches im Bereich zumindest einer fahrzeugendseitig gelegenen Knautschzone angeordnet ist, wobei das Knautschelement als rohrförmiger hohler Kasten ausgebildet ist. Solche Fahrzeuge sind z.B. durch die JP-A-07 145 842 bekannt.

Aus wirtschaftlichen und sicherheitstechnischen Gründen sind bei einem Schienenfahrzeug im Bereich der längsseitig gelegenen Enden üblicherweise Knautschzonen vorgesehen. Zum einen können dadurch bei einem Unfall Beschädigungen des Fahrzeuges vermieden oder verringert werden, zum anderen läßt sich dadurch die Sicherheit der Fahrzeuginsassen erhöhen. Die am häufigsten unmittelbar an Unfällen beteiligten Teile eines Schienenfahrzeuges sind der vordere und der hintere Wagenendbereich, da die meisten Unfälle Auffahrunfälle - im Fall eines Zugverbandes, der aus mehreren gekoppelten Waggons besteht, kann es bei einem Unfall zu einem Auffahren einzelnen Waggons untereinander kommen - bzw. frontale Zusammenstöße mit anderen Verkehrsteilnehmern oder Hindernissen sind.

Zum Schutz eines Schienenfahrzeug sind daher gemäß dem Stand der Technik in die vordere und zumeist auch in die hintere Fahrzeugfront röhrenförmige Knautschelemente integriert, die bei einer genügend starken Krafteinwirkung zusammengestaucht und gefaltet werden können. Durch diese Maßnahme wird ein Teil der kinetischen Energie, die auf das Fahrzeug wirkt, für die Deformation des Knautschelementes aufgewendet. Durch diese Reduktion der kinetischen Energie verringert sich auch die Belastung, die auf das restliche Schienenfahrzeug wirkt.

Aufgrund des großen Eigengewichtes und der damit verbundenen hohen kinetischen Energie des Schienenfahrzeuges können bei Unfällen, bei Verwendung herkömmlicher Knautschelemente, sehr hohe Kraftspitzen auftreten. Herkömmlicherweise wird versucht, dieses Problem dadurch zu lösen, dass man von einander getrennt eingebaute Knautschelemente, die als einfache rohrförmige Hohlkörper mit einem zumeist annähernd quadratischen Querschnitt ausgeführt sind, parallel nebeneinander in die Fahrzeugfront integriert, wobei die Längsseiten der Knautschelemente parallel zur Fahrtrichtung angeordnet sind. Üblicherweise werden diese Knautschelemente in den Kopfbereichen des Fahrzeuguntergestells angebracht und mit einem Querbalken, der als Stoßstange fungiert, miteinander verbunden. Von der zu erreichenden Knautschcharakteristik des gesamten Fahrzeuges hängt es ab, wie viele Knautschelemente Verwendung finden und ob diese an nur einem Wagenende oder an beiden eingebaut werden.

Nachteilig an den bekannten Vorrichtungen ist, dass dennoch unerwünscht hohe Kraftspitzen auftreten können, bevor es zu einer Faltung der Knautschelemente kommt, da die Auslösekraft der üblicherweise verwendeten Knautschelemente ca. dreimal so hoch wie deren mittlere Knautschkraft ist.

Unter der Auslösekraft versteht man die Kraft, die mindestens aufgebracht werden muss, um eine plastische Verformung des Knautschelementes einzuleiten. Beschreibt man den Knautschvorgang mit Hilfe eines Kraft-Weg-Diagramms, so entspricht die Amplitude der höchsten auftretenden Kraftspitze der Auslösekraft. Anders gesagt, ist die Auslösekraft die größte während des Knautschvorganges auftretende Kraft. Die mittlere Knautschkraft entspricht dem Mittelwert des Kraftverlaufes in soeben erwähnten Kraft-Weg-Diagramm. Der Betrag der Energieumwandlung wird jedoch von der mittleren Knautschkraft bestimmt. Daher ist es erstrebenswert, bei einer Knautschung möglichst rasch diesen Bereich zu erreichen. Um die erwünschte Knautschcharakteristik zu erreichen, müsste die Auslösekraft auf dem Niveau der mittleren Knautschkraft liegen. Es ist jedoch kein strukturelles Knautschelement bekannt, das dieses Problem lösen kann.

Um zu vermeiden, dass die bei einem Unfall auftretende hohe Kraftspitze zu Beschädigungen des Schienenfahrzeuges bzw. Verletzungen von Fahrzeuginsassen führt, muss daher die übrige Fahrzeugstruktur entsprechend stärker und schwerer ausgeführt werden, wodurch sich der Betrag der Schienenfahrzeugsnutzlast verringert und auch die Herstellungskosten erhöht werden.

Eine Aufgabe der Erfindung ist es daher, ein Knautschelement zu schaffen, bei dem die Auslösekraft auf das Niveau seiner mittleren Knautschkraft abgesenkt ist, wodurch sich das Eigengewicht von Schienenfahrzeugen sowie deren Herstellungskosten wesentlich reduzieren lässt.

Diese Aufgabe wird erfindungsgemäß durch die Merkmale, die den kennzeichnenden Teil des Anspruchs 1 bilden, gelöst.

Durch die Anordnung von zumindest einer Einknickung an dem Knautschelement ist es möglich, die Auslösekraft auf das Niveau der Knautschmittelkraft abzusenken.

Um eine kleine Auslösekraft zu erreichen, ist die Einknickung an dem Schienenfahrzeugsuntergestell abgewandten, längsseitigen Endbereich des Knautschelementes vorgesehen.

Zur Reduzierung der Auslösekraft ist es vorteilhaft, dass die Einknickung in einem in Fahrtrichtung liegenden Endbereich des Knautschelements liegt, da dieser als erster die bei einem Unfall auftretende dynamische Belastung aufnimmt. Auf diese Weise wird bei einer Knautschung sofort das Niveau der Knautschmittelkraft erreicht ohne, dass hohe Kraftspitzen auftreten.

Eine kostengünstige und leicht herzustellende Ausführungsform sieht vor, dass zwei einander gegenüberliegende Einknickungen in zu einander parallelen Seitenwänden des Knautschelements angeordnet sind.

Sehr gute Knautscheigenschaften lassen sich dadurch erreichen, dass das Knautschelement einen im wesentlichen quadratischen Querschnitt aufweist.

Um die Knautschcharakteristik zu verbessern, sind mit der zumindest einen, eine Einknickung aufweisenden Seitenwand in Berührung stehende Seitenwände an den Berührungsstellen mit der Einknickung mit dieser querschnittsgleich ausgebildet.

Gemäß einer vorteilhaften Ausführungsform, weist der Querschnitt des Knautschelementes eine Seitenlänge auf, die zwischen 100 und 200 mm beträgt.

Um einen genügend großen Knautschweg zu garantieren, beträgt die Länge des Knautschelementes vorzugsweise zwischen 800 und 1200 mm.

Eine vorteilhafte Ausführung sieht vor, dass die Wandstärke des Knautschelementes zwischen 3 und 7 mm beträgt.

Die Erfindung samt weiteren Vorteilen wird im folgenden anhand eines Ausführungsbeispiels näher erläutert, das in der Zeichnung veranschaulicht ist. In dieser zeigen
- Fig. 1 eine Draufsicht auf einen schematisch dargestellten Teil eines Schienenfahrzeuguntergestells mit erfindungsgemäßen Knautschelementen;
- Fig. 2 eine Seitenansicht eines erfindungsgemäßen Knautschelementes;
- Fig. 3 eine Draufsicht eines erfindungsgemäßen Knautschelementes;
- Fig. 4 einen Querschnitt entlang der Linie IV-IV in Fig. 2;
- Fig. 5 ein Kraft-Weg-Diagramm eines Knautschversuches mit einem herkömmlichen Knautschelement;
- Fig. 6 ein Kraft-Weg-Diagramm eines Knautschversuches mit einem erfindungsgemäßen Knautschelement.

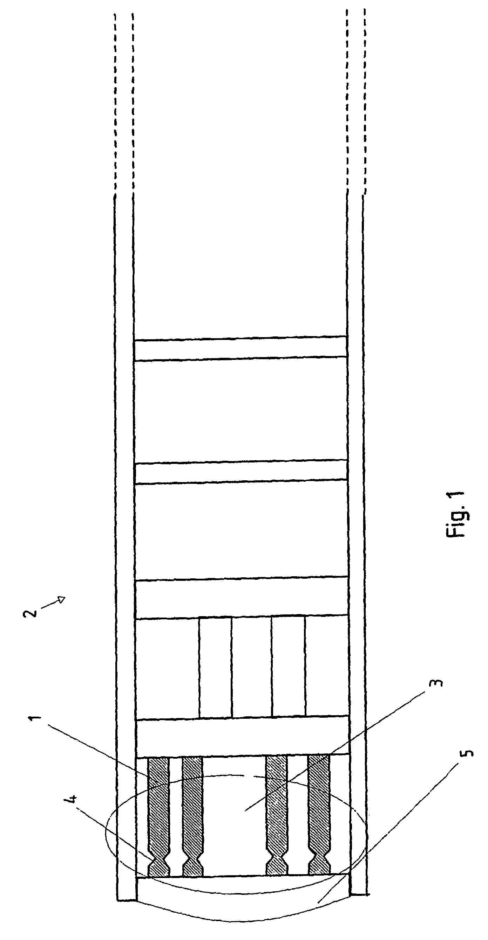

Gemäß Fig. 1 sind erfindungsgemäße Knautschelemente 1 im Bereich einer Knautschzone 3 eines Schienenfahrzeuguntergestells 2 angeordnet, wobei die Längsachsen der Knautschelemente 1 parallel zur Fahrzeugslängsachse verlaufen. An der Fahrzeugfront werden die einzelnen Knautschelemente 1 über einen Querbalken 5, der die Funktion einer Stoßstange ausübt, miteinander verbunden. Die dem Querbalken 5 nähergelegenen Endabschnitte der Knautschelemente 1 weisen Einknickungen 4 auf. Diese Maßnahme trägt wesentlich dazu bei, die Auslösekraft der Knautschelemente 1 herabzusetzen. Bei einem frontalen Zusammenstoß mit einem anderen Schienenfahrzeug oder einem Hindernis erfolgt die Krafteinleitung in die Knautschelemente 1 über den Querbalken 5, der vorzugsweise als geschweißter Kasten ausgeführt ist.

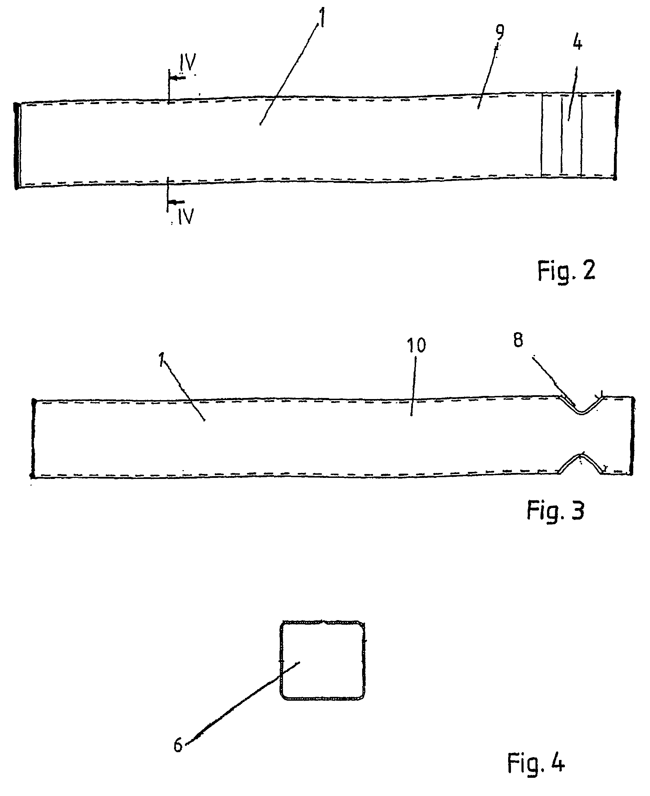

Gemäß Fig. 2 weist das Knautschelement 1 rechteckige Seitenflächen auf, die einen hohlen Kasten 6 bilden.

Um die den Knautschvorgang auslösende Kraft herabzusetzen ist an zwei Seitenflächen des Knautschelementes 1 in dem Endbereich, der dem Querbalken 5 nähergelegen ist, je eine Einknickung 4 vorgesehen, die über die ganze Breite der Seitenfläche verläuft. Es wäre natürlich denkbar, dass auch die anderen beiden Seiten je eine Einknickung 4 aufweisen. Jedoch hat sich in Knautschversuchen herausgestellt, dass sich die gewünschte Knautschcharakteristik schon mit zwei seitlich angeordneten Einknickungen 4 erreichen lässt.

Wie aus Fig. 3 ersichtlich sind die Einknickungen 4 an einander gegenüberliegenden Seiten des Knautschelementes 1 vorgesehen. Um die Knautschcharakteristik zu verbessern, sind mit der zumindest einen, eine Einknickung 4 aufweisenden Seitenwand 9 in Berührung stehende Seitenwände 10 an den Berührungsstellen 8 mit der Einknickung 4 mit dieser querschnittsgleich ausgebildet. Bei der Herstellung werden hierbei die Stellen 8 gemäß der Querschnittsform der Einknickungen ausgeschnitten.

Es hat sich in zahlreichen Versuchen herausgestellt, dass eine besonders günstige Formgebung der Einknickungen 4 darin besteht, dass diese den Querschnitt eines gleichschenkligen Dreiecks aufweisen, wobei die längste Seite offen ist. Über den Winkel zwischen den beiden gleichlangen Querschnittsseiten der Einknickungen 4 lässt sich der Betrag der Auslösekraft verändern. In der bevorzugten Ausführungsform beträgt dieser Winkel im wesentlichen 90°, wobei der Winkel je nach gewünschter Knautschcharakteristik verändert werden kann. Da die Knautschcharakteristik sehr stark von der Geometrie des Knautschelementes 1 abhängt - Querschnittsfläche des Knautschelementes bzw. Seitenlänge - kann entsprechend der jeweiligen Ausführungsform ein anderer Winkel als 90° vorgesehen sein.

Obwohl es prinzipiell möglich ist die Einknickungen 4 an jeder Stelle der Seitenwände des Knautschelementes 1 anzubringen, ist es vorteilhaft, wenn die Einknickungen 4 in dem Bereich der Seitenwände des Knautschelementes 1 angeordnet sind, der bei einem Unfall als erster die auftretende dynamische Belastung aufnimmt. Anders gesagt sollten die Einknickungen 4 vorteilhafterweise seitlich in einem in Fahrtrichtung liegenden Endbereich des Knautschelementes 1 angeordnet sein. Eine sehr gute Knautschcharakteristik lässt sich dadurch verwirklichen, dass der Abstand zwischen dem Schnittpunkt der beiden gleich langen Seiten der Einknickungen 4 und dem Querbalken 5 im Bereich zwischen 70 und 120 mm liegt.

Nach Fig. 4 ist das erfindungsgemäße Knautschelement 1 als hohler Kasten 6 mit einem im wesentlichen quadratischen Querschnitt ausgebildet. Fast jede symmetrische, Querschnittsform der hohlen Kästen 6 - Kreis, 4-Eck, 6-Eck.- eignet sich prinzipiell für ein erfindungsgemäßes Knautschelement 1. So sind z. B. auch drei Einknickungen 4 in einem Knautschelement 1 mit sechseckigem Querschnitt denkbar. Es hat sich jedoch in der Praxis herausgestellt, dass ein quadratischer Querschnitt ein für Knautschelemente 1 günstigstes Verhältnis von Auslösekraft zu Knautschmittelkraft aufweist.

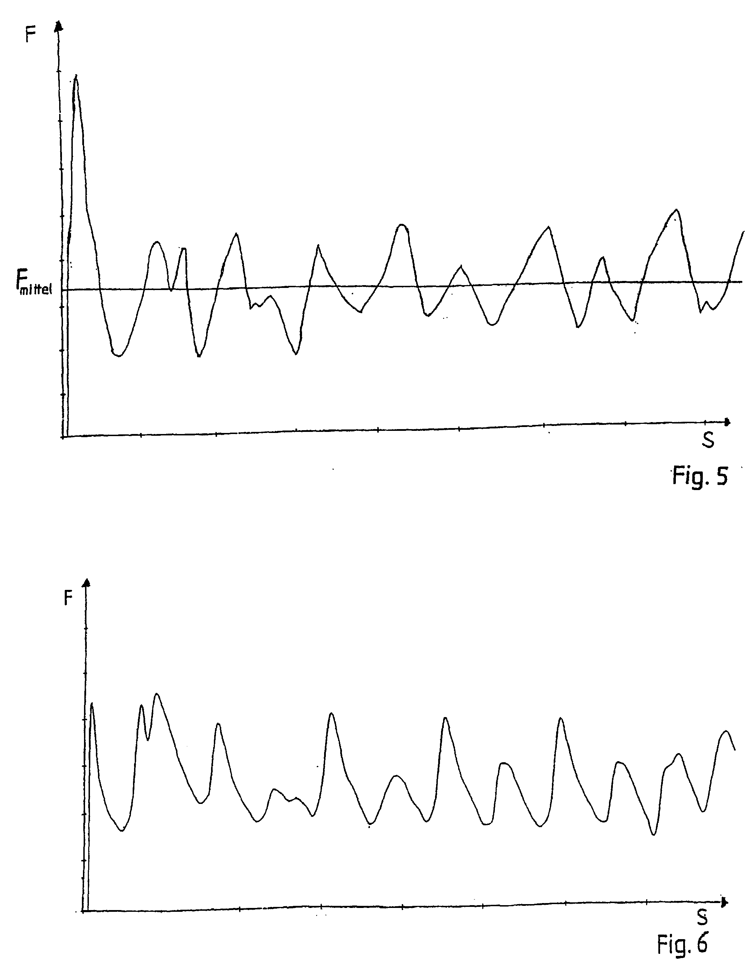

Die Auslösekraft eines üblicherweise verwendeten Knautschelementes 1 mit quadratischer Querschnittsfläche ist nach Fig. 5 ungefähr drei mal so hoch wie die Knautschmittelkraft. In dem dargestellten Diagramm ist die während des Knautschvorganges auf das Knautschelement 1 wirkende Kraft F über den Knautschweg s aufgetragen. Der zurückgelegte Knautschweg s entspricht der Längenreduktion des Knautschelementes 1. In dem Kraft-Weg-Diagramm entspricht das Maß der reduzierten Energie der Fläche unter der Kraft-Kurve F. Definitionsgemäß entspricht diese Fläche dem Produkt aus mittlerer Knautschkraft Fₘᵢₜₜₑₗ und Knautschweg s des Knautschelementes 1. Idealerweise sollte daher die Auslösekraft eines Knautschelementes 1 auf dem Niveau der mittleren Knautschkraft Fₘᵢₜₜₑₗ liegen, da das Maß der Energieabsorption hauptsächlich vom Wert der mittleren Knautschkraft Fₘᵢₜₜₑₗ und nicht von der Auslösekraft abhängt. Die mittlere Knautschkraft Fₘᵢₜₜₑₗ wiederum hängt einerseits von der Querschnittsfläche des Knautschelementes 1 und andererseits von seiner Seitenlänge ab.

Wie aus Fig. 6 ersichtlich lässt sich durch die Anordnung von Einknickungen 4 an einem Knautschelement 1 die Auslösekraft soweit reduzieren, dass sie im Bereich der mittleren Knautschkraft Fₘᵢₜₜₑₗ des Knautschelementes 1 liegt. Bei einem erfindungsgemäßen Knautschelement 1 wird daher ein optimales Verhältnis von Auslösekraft zu mittlerer Knautschkraft Fₘᵢₜₜₑₗ verwirklicht.

## Patentansprüche

1. Knautschelement (1) eines Schienenfahrzeuges, welches im Bereich zumindest einer fahrzeugendseitig gelegenen Knautschzone (3) angeordnet ist, wobei das Knautschelement (1) als rohrförmiger hohler Kasten (6) ausgebildet ist,
**dadurch gekennzeichnet, dass**
zumindest eine Seitenwand (9) des mit Polygonquerschnitt ausgebildeten Knautschelementes (1) eine nach innen gerichtete Einknickung (4) aufweist, wobei die Einknickung (4) an dem Schienenfahrzeugsuntergestell (2) abgewandten, längsseitigen Endbereich des Knautschelementes (1) vorgesehen ist.

2. Knautschelement nach Anspruch 1, **dadurch gekennzeichnet, dass** zwei einander gegenüberliegende Einknickungen (4) in zu einander parallelen Seitenwänden (9) des Knautschelementes (1) angeordnet sind.

3. Knautschelement nach einem der Anspruch 1 oder 2, **dadurch gekennzeichnet, dass** es einen im wesentlichen quadratischen Querschnitt aufweist.

4. Knautschelement nach einem der Ansprüche 1 bis 3, **dadurch gekennzeichnet, dass** mit der zumindest einen, eine Einknickung (4) aufweisenden Seitenwand (9) in Berührung stehende Seitenwände (10) an den Berührungsstellen (8) mit der Einknickung (4) mit dieser querschnittsgleich ausgebildet sind.

5. Knautschelement nach Anspruch 3, **dadurch gekennzeichnet, dass** sein Querschnitt eine Seitenlänge aufweist, die zwischen 100 und 200 mm beträgt.

6. Knautschelement nach einem der Ansprüche 1 bis 5, **dadurch gekennzeichnet, dass** seine Länge zwischen 800 und 1200 mm beträgt

7. Knautschelement nach einem der Ansprüche 1 bis 6, **dadurch gekennzeichnet, dass** seine Wandstärke zwischen 3 und 7 mm beträgt.

## Claims

1. Deformation element (1) of a rail-borne vehicle which is disposed in the region of at least one deformation zone (3) located on the end side of the vehicle, wherein the deformation element (1) is formed as a tubular hollow box (6),
**characterised in that**
at least one sidewall (9) of the deformation element (1) which is formed with a polygonal cross-section comprises an inwardly directed indentation (4), wherein the indentation (4) is provided on the longitudinal-side end region of the deformation element (1) remote from the rail-borne vehicle underframe (2).

2. Deformation element as claimed in claim 1, **characterised in that** two mutually opposite-lying indentations (4) are disposed in mutually parallel sidewalls (9) of the deformation element (1).

3. Deformation element as claimed in claim 1 or 2, **characterised in that** it comprises a substantially square cross-section.

4. Deformation element as claimed in any one of claims 1 to 3, **characterised in that** sidewalls (10) which are in contact with the at least one sidewall (9), which comprises an indentation (4), are formed on the contact points (8) with the indentation (4) in such a manner as to have an identical cross-section thereto.

5. Deformation element as claimed in claim 3, **characterised in that** its cross-section comprises a side length which amounts to between 100 and 200 mm.

6. Deformation element as claimed in any one of claims 1 to 5, **characterised in that** its length amounts to between 800 and 1200 mm.

7. Deformation element as claimed in any one of claims 1 to 6, **characterised in that** its wall thickness amounts to between 3 and 7 mm.

## Revendications

1. Elément déformable (1) d'un véhicule sur rail, lequel est placé dans la région d'au moins une zone déformable (3) située à l'extrémité du véhicule, ledit élément déformable (1) étant configuré sous forme de caisse (6) tubulaire creuse,
**caractérisé en ce que**
au moins une paroi latérale (9) de l'élément déformable (1) formé avec une section transversale de forme polygonale présente un pli (4) dirigé vers l'intérieur, le pli (4) étant prévu sur la zone de l'élément déformable (1) à l'extrémité du grand côté, ladite zone étant opposée au châssis du véhicule sur rail (2).

2. Elément déformable selon la revendication 1, **caractérisé en ce que** deux plis (4) l'un en face de l'autre sont placés dans des parois latérales (9) de l'élément déformable (1) parallèles les unes par rapport aux autres.

3. Elément déformable selon l'une quelconque des revendications 1 ou 2, **caractérisé en ce qu'**il présente une section transversale de forme carrée pour l'essentiel.

4. Elément déformable selon l'une quelconque des revendications 1 à 3, **caractérisé en ce que** des parois latérales (10) se trouvant en contact avec au moins une des parois latérales (9) présentant un pli (4) sont formées sur les points de contact (8) avec le pli (4) présentant la même section transversale que ce dernier.

5. Elément déformable selon la revendication 3, **caractérisé en ce que** sa section transversale présente un côté dont la longueur est comprise entre 100 et 200 mm.

6. Elément déformable selon l'une quelconque des revendications 1 à 5, caractérisé en ce que'sa longueur est comprise entre 800 et 1200 mm.

7. Elément déformable selon l'une quelconque des revendications 1 à 6, **caractérisé en ce que** l'épaisseur de sa paroi est comprise entre 3 et 7 mm.
